# EUROPÄISCHE PATENTSCHRIFT

(11) **EP 1 016 184 B1**
(45) Veröffentlichungstag und Bekanntmachung des Hinweises auf die Patenterteilung: **21.11.2001**
(21) Anmeldenummer: 98946222.1
(22) Anmeldetag: 09.07.1998
(51) Int. Cl.: H02K 3/28

(54) **ELEKTRISCHE MASCHINE, INSBESONDERE DREHSTROMGENERATOR**
ELECTRIC MACHINE, IN PARTICULAR THREE-PHASE ALTERNATOR
MACHINE ELECTRIQUE, NOTAMMENT ALTERNATEUR TRIPHASE

(30) Priorität: 29.08.1997 DE 19737681
(43) Veröffentlichungstag der Anmeldung: 05.07.2000
(73) Patentinhaber: ROBERT BOSCH GMBH, 70442 Stuttgart (DE)
(72) Erfinder: KREUZER, Helmut, D-71701 Schwieberdingen (DE)
(86) Internationale Anmeldenummer: DE9801914
(87) Internationale Veröffentlichungsnummer: WO9912247

(56) Entgegenhaltungen:
- DE-A- 3 408 394
- US-A- 2 731 576
- US-A- 3 070 734

## Beschreibung

Die Erfindung betrifft eine elektrische Maschine, insbesondere Drehstromgenerator, mit den im Oberbegriff des Anspruchs 1 genannten Merkmalen.

### Stand der Technik

Als Drehstromgeneratoren ausgebildete elektrische Maschinen sind bekannt. Diese werden beispielsweise bei der Bordnetzversorgung in Kraftfahrzeugen eingesetzt. Hierbei wird eine auf einem Läufer angeordnete Erregerwicklung mit einem Gleichstrom erregt. Hierdurch wird ein magnetisches Feld ausgebildet, das auf alternierend angeordnete Klauenpole eines Klauenpolläufers geleitet wird. Durch die alternierende Anordnung der Klauenpole wechseln sich Nord- und Südpol des magnetischen Feldes ab. Der Klauenpolläufer wird von einem Ständer umgeben, der ein Wicklungspaket aufweist. Dieses Wicklungspaket besteht bei einem Drehstromgenerator aus dreiphasig zusammengeschalteten Wicklungen, die von dem magnetischen Feld entsprechend der Rotation des Klauenpolläufers durchsetzt werden. Hierdurch wird in dem Wicklungspaket eine Spannung induziert, die an den jeweils zu einer Phase zusammengeschalteten Wicklungen als Generatorspannung abgegriffen wird. Ein derart aufgebauter Drehstromgenerator ist beispielsweise in der DE 34 08 394 A1 beschrieben.

Aus der DE-PS 2 4 680 ist beispielsweise bekannt, die Wicklungen eines Wicklungspakets aus zueinander parallel geschalteten Wicklungsdrähten zu bilden.

### Vorteile der Erfindung

Die erfindungsgemäße elektrische Maschine mit den im Anspruch 1 genannten Merkmalen bietet den Vorteil, daß in Abhängigkeit der Beschaltung des Wicklungspakets unterschiedlich hohe Generatorspannungen abgegriffen werden können. Dadurch, daß von den wenigstens drei parallel gewickelten Wicklungsdrähten einer Phase jeweils wenigstens zwei mit getrennten Phasenanschlußklemmen verbunden sind, an denen jeweils eine Teil-Generatorspannung abgreifbar ist, kann je nach Bedarf an den jeweils einer Phase zugeordneten Phasenanschlußklemmen eine Teil-Generatorspannung zur Verfügung gestellt werden. In bevorzugter Ausgestaltung der Erfindung ist vorgesehen, daß die Phasenanschlußklemmen einer Phase zum Abgreifen einer sich aus den Teil-Generatorspannungen ergebenden Gesamt-Generatorspannung in Reihe schaltbar sind. Hierdurch wird es in einfacher Weise möglich, mittels eines Schaltmittels die an sich parallel gewickelten Wicklungen in Reihe zu schalten, um so bei Bedarf eine höhere Generatorspannung zur Verfügung zu stellen.

Insgesamt ist mit einfachen Mitteln, die ohne Eingriff auf die konstruktive Gestaltung der elektrischen Maschine realisierbar sind, möglich, eine elektrische Maschine für die Zurverfügungstellung unterschiedlich hoher Generatorspannungen einzusetzen.

Weitere vorteilhafte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert.

Es zeigen:
- Figur 1: schematisch eine Teilansicht eines Drehstromgenerators;
- Figur 3: eine ausschnittsweise Vergrößerung der Teilansicht und

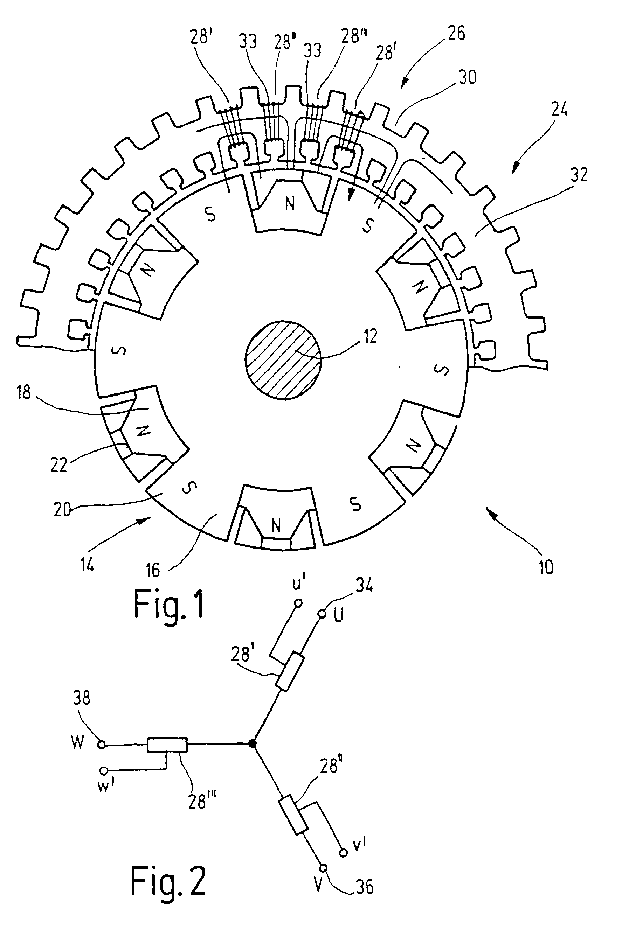

- Figuren 2, 4 bis 6: Schaltungsvarianten des Drehstromgenerators.

### Beschreibung der Ausführungsbeispiele

In der Figur 1 ist in einem Ausschnitt schematisch eine Schnittdarstellung durch einen Drehstromgenerator 10 gezeigt. Der Drehstromgenerator 10 weist einen auf einer Antriebswelle 12 drehfest angeordneten Klauenpolläufer 14 auf. Der Klauenpolläufer 14 umfaßt sich abwechselnd von Polscheiben 16 beziehungsweise 18 koaxial zur Antriebswelle 12 erstreckende Klauenpole 20 beziehungsweise 22. Durch eine - in Figur 1 nicht dargestellte - auf der Antriebswelle 12 angeordnete Erregerwicklung, die mit Gleichstrom gespeist wird, werden die Klauenpole magnetisiert, so daß über den Umfang des Klauenpolläufers 12 abwechselnd magnetische Nordpole N und magnetische Südpole S angeordnet sind.

Der Klauenpolläufer 14 wird von einem Ständer 24 umgeben, der ein Wicklungspaket 26 trägt. Das Wicklungspaket 26 wird von mehreren Wicklungen 28 gebildet, die in Nuten 30 eines Ständerblechpakets 32 angeordnet sind.

Nach weiteren, nicht dargestellten Ausführungsbeispielen, kann die Anordnung des Wicklungspakets 26 von der gezeigten Darstellung abweichen. Entscheidend ist, daß die Wicklungen 28 von dem vom Klauenpolläufer 14 ausgehenden Magnetfeld durchsetzt werden.

Die Wicklungen 28 werden von Wicklungsdrähten 33 und 42 gebildet, die in nachfolgend erläuterter Weise geschaltet sind.

Entsprechend der Anzahl der Klauenpole 20 beziehungsweise 22 sind eine entsprechende Anzahl von Wicklungen 28 vorgesehen, die, bei einem Drehstromgenerator, zu drei Phasen U, V und W zusammengeschaltet sind. In Figur 2 ist das Prinzipschaltbild gezeigt. Nach dieser Darstellung sind die Wicklungen 28 in drei Strängen 28', 28" und 28"'sternförmig verschaltet, so daß an Phasenanschlußklemmen 34, 36 beziehungsweise 38 die Phasenspannungen u, v beziehungsweise w abgegriffen werden können. Es ist klar, daß die in Figur 2 gezeigten Wicklungsstränge 28', 28" beziehungsweise 28"' durch eine entsprechende Anzahl von in Reihe geschalteten Wicklungen 28 des Wicklungspakets 26 gebildet sind. Dabei können zwischen den in Reihe geschalteten Wicklungen Teil-Generatorspannungen u', v', w' abgegriffen werden. Darüber hinaus sind auch andere Schaltungen, beispielsweise eine Dreieckschaltung, möglich.

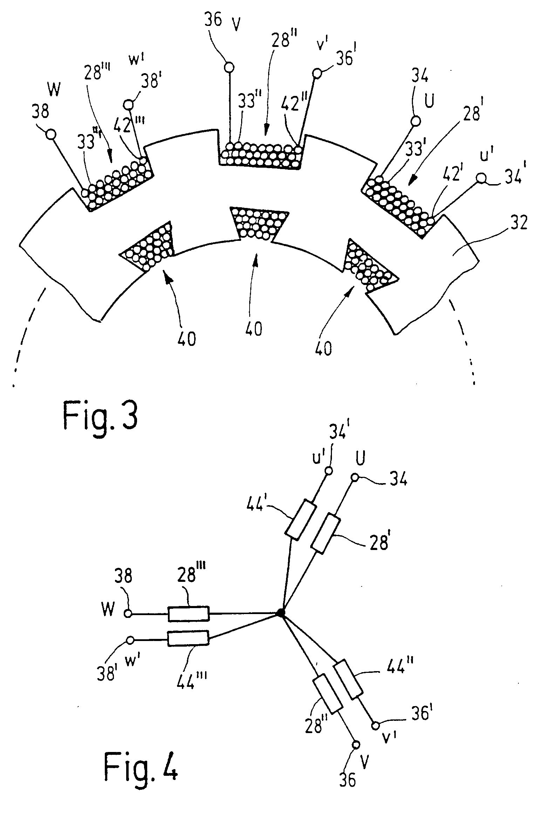

In Figur 3 wird in einer schematischen, vergrößerten Darstellung deutlich, daß die Wicklungen 28 von den Wicklungsdrähten 33 gebildet werden. Mehrere Wicklungsdrähte 33 sind jeweils zu einem Bündelleiter 40 zusammengefaßt, der in mehreren Windungen in die Nuten 30 eingewickelt ist. Dies bedeutet, die Wicklungsdrähte 33 der Bündelleiter der einzelnen Phasen U, V beziehungsweise W sind jeweils parallel angeordnet und in den Phasenanschlußklemmen 34, 36 beziehungsweise 38 zusammengeschaltet. Hierbei sind jedoch nicht alle Wicklungsdrähte 33 mit den Phasenanschlußklemmen 34, 36 beziehungsweise 38 verbunden, sondern wenigstens ein Wicklungsdraht 42', 42" beziehungsweise 42"' jeder Phase U, V, W ist mit einer eigenen Phasenanschlußklemme 34', 36' beziehungsweise 38' verbunden. An den Phasenanschlußklemmen 34', 36' beziehungsweise 38' kann somit eine lastunabhängige Phasenspannung u', v' beziehungsweise w' abgegriffen werden.

Nach unterschiedlichen Ausführungsbeispielen kann die Anzahl der Wicklungsdrähte 33, die zu den Phasen U, V und W zusammengeschaltet sind beziehungsweise der Wicklungsdrähte 42, die zu den Phasen U', V' und W' zusammengeschaltet sind, variieren. Wenigstens einer der gesamten Wicklungsdrähte (Wicklungsdrähte 42) der Bündelleiter 40 ist zu den Phasen U', V' beziehungsweise W' geschaltet. Die Wicklungsdrähte 33 ergeben somit eine Hauptwicklung 28, während die Wicklungsdrähte 42 eine Hilfswicklung 44 ergeben.

Anhand von Figur 4 wird die sich durch die Aufteilung in Haupt- und Hilfswicklung ergebende Schaltungsanordnung verdeutlicht. Die Wicklungsdrähte 42 sind zu Wicklungen 44 zusammengefaßt, die die Hilfswicklung ergeben.

Entsprechend der in Figur 4 gezeigten Schaltungsanordnung kann nunmehr, je nach Bedarf, mittels externer - nicht dargestellter - Schaltmittel entweder die an den Phasen U, V, W anliegenden Generator(phasen-)spannungen u, v, w oder die an den Phasen U', V' beziehungsweise W' anliegenden Generator(phasen-)spannungen u', v' beziehungsweise w' abgegriffen werden.

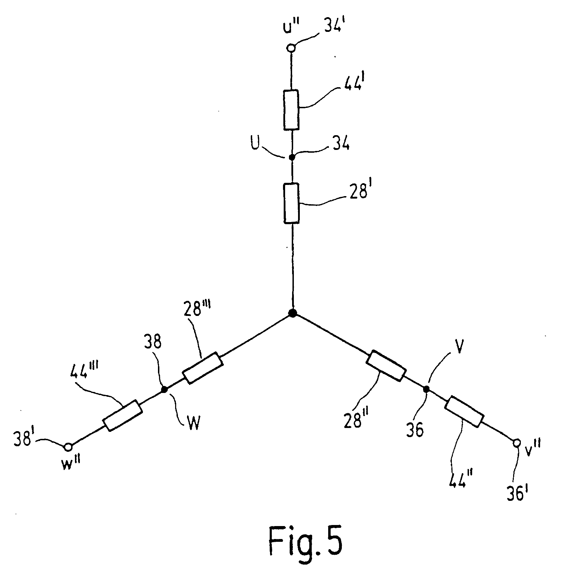

Entsprechend der in Figur 5 gezeigten Schaltungsanordnung ist es ebenfalls möglich, mittels nicht dargestellter Schaltmittel die Wicklungen 28 beziehungsweise 44 in Reihe zu schalten, so daß an der Phasenanschlußklemme 34' die Phase U", an der Phasenanschlußklemme 36' die Phase V" und an der Phasenanschlußklemme 38' die Phase W" anliegt. Somit kann eine Generatorspannung u", v" und w" abgegriffen werden, wobei die Spannung u" sich aus der Summe der Spannungen u und u', die Spannung v" sich aus der Summe der Spannungen v und v' sowie die Spannung w" sich aus der Summe der Spannungen w und w' ergibt.

Insgesamt ist mit einfachen Mitteln möglich, von dem Drehstromgenerator 10 insgesamt drei unterschiedliche Generatorspannungen abzugreifen. Dadurch, daß die Wicklungen 28 beziehungsweise 44 von einzelnen, das heißt wenigstens einem, parallel geschalteten Wicklungsdrähten 33 beziehungsweise 42 gebildet werden, kann für die Herstellung des Wicklungspakets 26 die für eine Serienfertigung geeignete Wickeltechnik weiter genutzt werden, ohne daß Änderungen in der Wickeltechnik oder konstruktive Änderungen an dem Drehstromgenerator notwendig sind. Lediglich die zusätzlich herausgeführten Phasenanschlußklemmen 34', 36' sowie 38' sowie die die Umschaltung zwischen den Phasenanschlußklemmen 34, 36, 38 beziehungsweise 34', 36' und 38' notwendigen Schaltmittel sind zusätzlich vorzusehen. Entsprechend der gewünschten Generatorspannung kann so durch einfaches Umschalten zwischen einer niedrigeren, einer höheren beziehungsweise einer sich aus der Summe der beiden Spannungen ergebenden Spannung gewechselt werden. Alle Wicklungsdrähte 33 und 42 haben zur besseren Verarbeitung einen vorzugsweise gleichgroßen Querschnitt.

Durch die Bildung der Bündelleiter 40 von einer Vielzahl, relativ dünner Wicklungsdrähte 33 beziehungsweise 42 ist darüber hinaus ein hoher Füllgrad der Nuten 36 möglich, so daß insgesamt eine Wirkungsgradverbesserung des Drehstromgenerators 10 möglich ist.

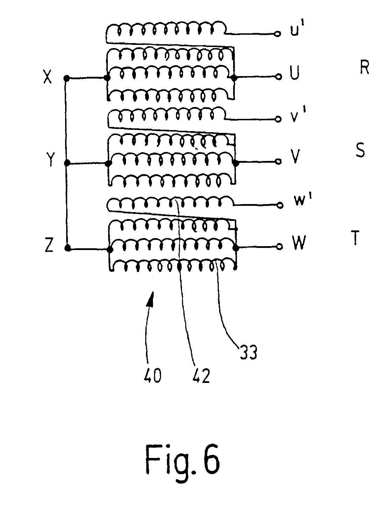

Bei dem Ausführungsbeispiel nach Figur 6 sind die Wicklungen der Phasen R, S, T eines Drehstromgenerators aus jeweils einem Bündelleiter 40 in die Nuten seines Statorwicklungspaketes eingewickelt, wobei jeder Bündelleiter aus drei zueinander parallel geschalteten Wicklungsdrähten 33 und einem dazu in Reihe geschalteten Wicklungsleiter 42 besteht. Bei dieser Ausführung werden an den Hauptwicklungen mit den Anschlußklemmen U, V und W die Verbraucher des Generators, insbesondere eine Gleichrichterschaltung zur Versorgung eines Gleichstrom-Akkumulators im Fahrzeug angeschlossen und an den Anschlußklemmen U', V' und W' der Hilfswicklung wird eine doppelt so hohe Phasenspannung für Steuerzwecke und zur Versorgung der Erregerwicklung des Generators zur Verfügung gestellt. Da die Wicklungsanfänge und die Wicklungsenden auf ein und derselben Stirnseite des Statorwicklungspaketes liegen, ist die Verschaltung gemäß Figur 6 dort beziehungsweise an einem dort befindlichen Anschlußteil problemlos möglich.

## Patentansprüche

1. Elektrische Maschine, insbesondere Drehstromgenerator, mit einem, von einem rotierenden Magnetfeld durchsetzbaren Wicklungspaket, wobei mehrere Wicklungen des Wicklungspakets jeweils zu wenigstens einer Phase zusammengeschaltet sind, an der eine Generatorspannung abgreifbar ist, und die Wicklungen aus mehreren parallel gewickelten Wicklungsdrähten gebildet werden, **dadurch gekennzeichnet, daß** von den mindestens drei parallel gewickelten Wicklungsdrähten (33, 42) einer Phase (U, V, W, U', V', W') jeweils mindestens zwei mit getrennten Phasenanschlußklemmen (34, 36, 38, 34', 36', 38') verbunden sind, an denen jeweils eine Teil-Generatorspannung (u, v, w, u', v', w') abgreifbar ist.

2. Elektrische Maschine nach Anspruch 1, **dadurch gekennzeichnet, daß** die Wicklungen (28', 28", 28"'; 44', 44", 44"') einer Phase (U, U'; V, V'; W, W') zum Abgreifen einer sich aus den Teil-Generatorspannungen (u, u '; v, v'; w, w') ergebenden Gesamt-Generatorspannung (u", v", w") in Reihe schaltbar sind.

3. Elektrische Maschine nach einem der vorhergehenden Ansprüche, **dadurch gekennzeichnet, daß** die Wicklungen (28, 44) von einem gemeinsamen Bündelleiter (40) gebildet sind.

4. Elektrische Maschine nach einem der vorhergehenden Ansprüche, **dadurch gekennzeichnet, daß** die Wicklungen (28) eine Hauptwicklung und die Wicklungen (44) eine Hilfswicklung bilden.

5. Elektrische Maschine nach einem der vorhergehenden Ansprüche, **dadurch gekennzeichnet, daß** die Hauptwicklungen (28) wenigstens zwei parallel geschaltete Wicklungsdrähte (33) aufweisen.

6. Elektrische Maschine nach einem der vorhergehenden Ansprüche, **dadurch gekennzeichnet, daß** die Hilfswicklungen (44) wenigstens einen Wicklungsdraht (42) aufweisen.

## Claims

1. Electrical machine, in particular a three-phase alternator, having a winding core through which a rotating magnetic field can pass, with a number of windings of the winding core in each case being interconnected to form at least one phase across which an alternator voltage can be tapped off, and the windings being formed from a number of parallel-wound winding wires **characterized in that**, of the at least three parallel-wound winding wires (33, 42) of one phase (U, V, W, U', V', W'), at least two are in each case connected to separate phase connecting terminals (34, 36, 38, 34', 36', 38'), between which a partial alternator voltage (u, v, w, u', v', w') can in each case be tapped off.

2. Electrical machine according to Claim 1, **characterized in that** the windings (28', 28", 28'''; 44', 44", 44''') of one phase (U, U'; V, V'; W, W') can be connected in series in order to tap off an overall alternator voltage (u", v", w") which results from the partial alternator voltages (u, u'; v, v'; w, w').

3. Electrical machine according to one of the preceding claims, **characterized in that** the windings (28, 44) are formed by a common multiple conductor (40).

4. Electrical machine according to one of the preceding claims, **characterized in that** the windings (28) form a main winding, and the windings (44) form an auxiliary winding.

5. Electrical machine according to one of the preceding claims, **characterized in that** the main windings (28) have at least two parallel-connected winding wires (33).

6. Electrical machine according to one of the preceding claims, **characterized in that** the auxiliary windings (44) have at least one winding wire (42).

## Revendications

1. Machine électrique, notamment alternateur triphasé, comportant un paquet d'enroulements qui peuvent être traversés par un champ magnétique tournant et dont plusieurs sont connectés chaque fois à au moins une phase sur laquelle on peut prélever une tension d'alternateur, ces enroulements étant constitués de plusieurs fils d'enroulement montés en parallèle,
**caractérisée en ce que**
parmi les fils d'enroulement (33, 42) au nombre de trois au moins, enroulés en parallèle et appartenant à une phase (U, V, W, U', V', W'), chaque fois au moins deux fils sont reliés à des bornes de raccordement de phases séparées (34, 36, 38, 34', 36', 38') sur lesquelles on peut prélever une tension partielle d'alternateur (u, v, w, u', v', w').

2. Machine électrique selon la revendication 1,
**caractérisée en ce que**
les enroulements (28', 28", 28'''; 44', 44", 44''') d'une phase (U, U' ; V, V' ; W, W') peuvent être connectés en série pour disposer d'une tension globale d'alternateur (u", v", w") résultant des tensions partielles d'alternateur (u, u' ; v, v' ; w, w').

3. Machine électrique selon l'une quelconque des revendications précédentes,
**caractérisée en ce que**
les enroulements (28, 44) sont constitués par un faisceau conducteur (40) commun.

4. Machine électrique selon l'une quelconque des revendications précédentes,
**caractérisée en ce que**
les enroulements (28) forment un enroulement principal et les enroulements (44) un enroulement auxiliaire.

5. Machine électrique selon l'une quelconque des revendications précédentes,
**caractérisée en ce que**
les enroulements principaux (28) comportent au moins deux fils d'enroulement (33) montés en parallèle.

6. Machine électrique selon l'une quelconque des revendications précédentes,
**caractérisée en ce que**
les enroulements auxiliaires (44) comportent au moins un fil d'enroulement (42).
